# EUROPÄISCHE PATENTSCHRIFT

(11) **EP 3 288 274 B1**
(45) Veröffentlichungstag und Bekanntmachung des Hinweises auf die Patenterteilung: **24.06.2020**
(21) Anmeldenummer: 17401079.3
(22) Anmeldetag: 14.07.2017
(51) Int. Cl.: H04N 21/436, H04N 21/4405, H04N 21/418, H04N 21/426

(54) **VERFAHREN FÜR EINE EMPFANGSEINRICHTUNG, EINE EMPFANGSEINRICHTUNG SOWIE EINE ANORDNUNG**
METHOD FOR A RECEIVING DEVICE, A RECEIVING DEVICE, AND AN ASSEMBLY
PROCÉDÉ POUR UN DISPOSITIF DE RÉCEPTION, DISPOSITIF DE RÉCEPTION ET SYSTÈME

(30) Priorität: 26.08.2016 DE 102016115892
(43) Veröffentlichungstag der Anmeldung: 28.02.2018
(73) Patentinhaber: TechniSat Digital GmbH, 54550 Daun (DE)
(72) Erfinder: Marschalek, Matthias, 01157 Dresden (DE)

(56) Entgegenhaltungen:
- EP-A1- 2 309 727
- EP-A1- 2 757 796
- US-A1- 2004 114 051
- US-A1- 2007 098 169
- US-A1- 2015 040 155
- US-B1- 6 973 022

## Beschreibung

Die Erfindung betrifft ein Verfahren für eine Empfangseinrichtung, eine Empfangseinrichtung sowie eine Anordnung. Die Empfangseinrichtung ist eingerichtet zum Empfangen und Ausgeben von Medieninhalt sowie von verschlüsselt übertragenen Medieninhalt. Die Empfangseinrichtung ist zum Empfangen insbesondere von linearen Medieninhalten ausgebildet. Die Lösung eignet sich zur Verwendung auf dem Gebiet der Fernsehtechnik.

Bei der Empfangseinrichtung kann es sich beispielsweise um ein TV-Gerät oder um ein an einen Flachbildschirm angeschlossenes externes Gerät handeln, das für den Empfang von Rundfunk und zur Ausgabe/Wiedergabe von Bild (inklusive Ton) insofern ausgebildet ist, dass ein dafür vorgesehenes Signal (zum Beispiel HDMI) von dem Gerät bereitgestellt werden kann. Eine Empfangseinrichtung kann aber auch ein Computerprogramm mit und für einen TV-Empfänger (z.B. TV-Karte, TV-USB-Stick) sein, der für den Rundfunkempfang eingerichtet ist. Eine Empfangseinrichtung kann im weitesten Sinne auch ein Gerät zum Radioempfang sein oder eine vergleichbare Einrichtung in einem Kraftfahrzeug.

Bekannt sind Empfangseinrichtungen, die zum Aufzeichnen von Medieninhalt eingerichtet sind. Für das Aufzeichnen sind ferner auch Geräte bekannt, die separat zu einem TV-Gerät aufgestellt sein können. Es handelt sich dabei um sogenannte Videorecorder (VR). Geläufig sind die Begriffe digitaler Videorecorder (DVR) oder auch persönlicher Videorecorder (PVR).

Die technische Lösung befasst sich damit, dass eine Empfangseinrichtung zum gleichzeitigen Empfangen mehrerer Medieninhalte eingerichtet ist (sog. Multi-Tuner-TV) sowie zum gleichzeitigen Entschlüsseln der mehreren Medieninhalte mittels mehrerer Module (mindestens zwei Module). Eine solche Empfangseinrichtung ist aus dem Dokument US 2007/098169 A1 bekannt.

Für ein solches Modul sowie in dem technischen Umfeld sind mehrere Abkürzungen gebräuchlich wie zum Beispiel CI, CI+, CAM und CAS. Dabei steht das C für Bedingung oder für Beschränkung (engl. conditional) das A für Zugriff (engl. access), sodass hiermit eine Zugangskontrolle gemeint ist; insbes. für Bezahlfernsehen (engl. PayTV).

Die übrigen Buchstaben I, M und S stehen für Schnittstelle (engl. interface), Modul bzw. System.

Technisch besteht das einsatzbereite Modul üblicherweise aus zwei Komponenten, nämlich aus einer Karte (sog. Chip-Karte oder SmardCard) und aus einem Einschub mit einer PC-Card-Schnittstelle (vormals PCMCIA-Schnittstelle) einerseits und mit einer Aufnahme für die Karte andererseits. Das Modul ist für einen sog. PC-Card-Schacht (engl. slot) eingerichtet, der an TV-Geräten, an sog. Set-Top-Boxen aber auch an PCs sowie an tragbaren Computern (engl. notebook oder laptop) eingerichtet sein kann. Der Einschub weist im Wesentlichen schaltungstechnische Mittel auf, die zur Durchführung der Entschlüsselung benötigt werden, während die Karte dafür vorgesehen ist, die Legitimation zur Entschlüsselung mitzubringen. Über die PC-Card-Schnittstelle erfolgt die Kopplung des Einschubes mit einer Platine (u.a. engl. motherboard) der Empfangseinrichtung.

Eine Ausführungsform eines Moduls ist aus der DE 198 47 071 A1 bekannt.

Üblicherweise wird die Legitimation mit dem Erwerb der Karte für einen begrenzten Zeitraum (z.B. 1 Jahr) vergeben im Sinne eines Abonnements. Nach dem Verlust der Legitimation durch Zeitablauf ist die Karte üblicherweise nicht mehr zu gebrauchen und folglich ist die Entschlüsselung nicht mehr möglich. Zum Verlängern der Legitimation müsste die Freischaltung der Karte erneuert oder eine neue Karte beschafft werden. Der Einschub ist weiterhin funktionsfähig. Ohne eine gültige Karte ist das Modul nicht einsatzfähig.

Es ist ferner bekannt, dass linearer Medieninhalt auch verschlüsselt übertragen wird. Es gibt eine große Zahl von Rundfunk-Programmen, die über Satellit (SAT) oder Kabel bereitgestellt werden und die verschlüsselt sind (z.B. "MTV"). Eine Empfangseinrichtung wie ein TV-Gerät kann üblicherweise mindestens ein solches Rundfunk-Programm über einen Empfangskanal empfangen. Die Kennung des Empfangskanals kann eine Nummer oder eine sonstige Bezeichnung sein (z.B. "ARD"). Regelmäßig sind solche Kennungen eindeutig. Die Art und Weise der Verschlüsselung kann sich bei den Programmen unterscheiden. Es kommt darauf an, mit welchen Verfahren oder mit welchem Algorithmus der Medieninhalt verschlüsselt wird (primärerer Algorithmus). Damit das Entschlüsseln funktioniert, ist es nötig, dass das Modul und das insbesondere der Einschub des Moduls das Verfahren und/oder den Algorithmus unterstützt (sekundärer Algorithmus). Gebräuchlich sind Einschübe sowie Module, die mehrere Algorithmen unterstützen. D.h., dass zumindest ein Einschub/Modul ausreichen kann, um damit und auch gleichzeitig mehrere gleichzeitig empfangene verschlüsselte Rundfunk-Programme (verschlüsselte Empfangskanäle) zu entschlüsseln. Selbiges kann zum Beispiel der Fall sein, wenn zeitgleich mehrere Aufnahmen/Aufzeichnungen laufen.

Mehrere Module bieten sich u.a. dann an, wenn es darauf ankommt, mehrere verschlüsselte Empfangskanäle gleichzeitig zu entschlüsseln und wenn selbige beispielsweise mit primäreren Algorithmen verschlüsselt sind, die als sekundäre Algorithmen nicht mehr durch ein Modul unterstützt werden, sondern nur durch mehrere Module. Ferner kann es sein, dass zwar der vorhandene Einschub die erforderlichen primäreren Algorithmen unterstützt, hierfür aber eine zusätzliche Legitimation, d.h. eine zusätzliche Karte benötigt wird und mithin ein zusätzlicher Einschub für die zusätzliche Karte.

Hinsichtlich der Karte gibt es zwischenzeitlich auch alternative technische Lösungen, die die Karte ersetzen können. Bezüglich der Algorithmen (primäre und sekundäre) ist für eine Entschlüsselung eine Übereinstimmung notwendig. Mitunter ist auch von Verschlüsselungssystemen oder von sog. CA-Systemen die Rede (engl. CA="conditional access"). Solche CA-Systeme werden mit einer Identifikation gekennzeichnet. Derartige Identifikationen (CA System IDs) sind in Bereiche nach Firmen (z.B. Irdeto, Nagravision) aufgeteilt, wobei die Firmen die IDs/ Identifikationen innerhalb des eigenen Bereiches vergeben. Mit anderen Worten kann eine Übereinstimmung der Algorithmen (primäre und sekundäre) anhand von Identifikationen festgestellt werden, wobei zu dem verschlüsselten Empfangskanal die Identifikation des primären Algorithmus aus dem DVB-Datenstrom ermittelt werden kann. Ferner kann das Modul mittels einer Abfrage eine Liste der Identifikationen der primären Algorithmen bereitstellen. Details hierzu sind u.a. in der Europäischen Norm EN 50221 (Titel in engl.: "Common Interface Specification for Conditional Access and other Digital Video Broadcasting Decoder Applications") beschreiben sowie im Standard ETSI TS 101 699.

Die Vielfalt der Hersteller von Verschlüsselungsmodulen hat bei möglicherweise unterschiedlichem Verständnis des Inhaltes der Norm zu einer Reihe von technischen Varianten der Module geführt, die derart unterschiedlich reagieren, dass mittlerweile in einer Empfangseinrichtung keine zuverlässige Vorhersage auf der Basis der besagten Abfrage mehr möglich ist. D.h., dass nicht vorab ermittelt werden kann, ob eine Entschlüsselung des verschlüsselten Empfangskanals mittels des Moduls auch tatsächlich funktioniert.

Aufgrund dieser Tatsache wurde mindestens ein Prüfverfahren gefunden, wobei der über den verschlüsselten Empfangskanal empfangenen Transportstrom an ein oder an mehrere Module zeitgleich übertragen wird (d.h. eingangsseitig) und dabei die am Ausgang des Modules ausgelieferten Bilddaten dahingehend überprüft werden, ob diese ein sog. Bewegtbild erzeugen, dass den Medieninhalt repräsentiert.

Sofern die Empfangseinrichtung lediglich ein Modul zum Entschlüsseln aufweist, stellt sich auch die Frage nach der Auswahl des "richtigen" Modules -mit dem die Entschlüsselung funktioniert- nicht. In dem Fall dass zumindest zwei Module eingerichtet sind, kommt es bereits darauf an, dass sich die Funktionalität der Empfangseinrichtung stets das richtige Modul zuordnet, abhängig davon, welche Identifikation dem verwendeten Empfangskanal zugeordnet ist.

Eine bekannte Lösung ist die, dass für die Zuordnung in der Empfangseinrichtung eine Konfiguration hinterlegt (gespeichert) ist, die ein Bediener möglicherweise händisch angelegt hat. Die Konfiguration legt fest, welches Rundfunk-Programm mit welchem Modul zu entschlüsseln ist.

Bezüglich der richtigen Zuordnung bei mindestens zwei Modulen und in Anbetracht des genannten Prüfverfahren kann auf die besagte Konfiguration verzichtet werden, wenn die Zuordnung derart automatisch erfolgt, dass stets das zuerst gefundene Modul, dass richtig entschlüsselt, weil eine sog. Bewegtbild erkannt wurde und mithin das Prüfverfahren ein positives Ergebnis liefert, verwendet wird.

Im Übrigen ist nach getroffener Zuordnung und der Kopplung des Empfangskanals mit dem Modul, d.h. bei laufender Entschlüsselung, ein Umschalten auf ein anderes Modul möglicherweise mit einer Bildstörung verbunden. Um das Risiko zu vermeiden, dass eine laufende Aufzeichnung eine oder mehrere solcher Bildstörungen aufweist, wird ein derartiges Umschalten vermieden.

Ein Problem, das weder mit der Konfiguration noch mit der automatischen Zuordnung mittels Prüfverfahren zufriedenstellend gelöst werden kann, soll nachfolgend an einem Beispiel erklärt werden. Zunächst sind zwei Module vorgesehen. Die Module unterstützen sekundäre Algorithmen mit folgenden Identifikationen: das erste Modul die Identifikationen A, B, C und D sowie das zweite Modul die Identifikationen C, D und E. Folglich unterstützen beide Module jeweils die sekundäre Algorithmen mit den Identifikationen C und D, das erste Modul als einziges A und B sowie das zweite Modul als einziges E. Sofern es beispielweise um einen primären Algorithmus mit der Identifikationen C (oder D) geht, kommen zunächst beide Module in Betracht. Beispielsweise wird das erste Modul zugeordnet und zum Entschlüsseln verwendet. Aufgrund einer geplanten Aufzeichnung, die nachfolgend startet, entsteht der Bedarf an einem sekundären Algorithmus mit der Identifikation A (oder B). Da nunmehr das erste Modul bereits in Verwendung ist, scheitert die Entschlüsselung mit der Identifikation A, obwohl selbige in Anbetracht des Gesamtumfanges sekundärer Algorithmen realisierbar gewesen wäre.

Ein erstes Lösungsbedürfnis gegenüber dem Stand der Technik kann darin gesehen werden, das beispielhaft geschilderte Problem zu mildern, indem die Häufigkeit seines Auftretens verringert wird.

Es wird ein Verfahren gemäß Anspruch 1 vorgeschlagen, eine Empfangseinrichtung gemäß Anspruch 8 sowie eine Anordnung gemäß Anspruch 9.

Gemäß einer ersten Ausgestaltung ist ein Verfahren vorgesehen für eine Empfangseinrichtung, die eingerichtet ist zum Empfangen und zum Ausgeben von Medieninhalt sowie von verschlüsselt übertragenen Medieninhalt. Ein Medieninhalt wird über einen Empfangskanal empfangen und dem Empfangskanal ist mindestens eine Kennung zugeordnet. Es sind mehrere Empfangskanäle eingerichtet, wobei mindestens ein verschlüsselter Empfangskanal eingerichtet ist zum Empfangen von verschlüsselt übertragenen Medieninhalt. Der verschlüsselt übertragene Medieninhalt wurde mittels eines primären Algorithmus verschlüsselt. Es ist mindestens ein Modul eingerichtet zum Entschlüsseln mindestens eines verschlüsselt übertragenen Medieninhaltes mittels eines oder mehrerer sekundärer Algorithmen. Mittels des Verfahrens wird einem verschlüsselten Empfangskanal ein Modul zugeordnet und dieser verschlüsselte Empfangskanal wird mit dem zugeordneten Modul gekoppelt zum Entschlüsseln eines verschlüsselt übertragenen Medieninhaltes mittels des zugeordneten Moduls. Ein richtig zugeordnetes und gekoppeltes Modul stellt entschlüsselten Medieninhalt indem bereit, dass die mit dem primären Algorithmus erzeugte Verschlüsselung mittels des sekundären Algorithmus aufgelöst wird, wobei ein falsch zugeordnetes und gekoppeltes Modul keinen entschlüsselten Medieninhalt bereitstellt. Ein Prüfverfahren ist eingerichtet zum Ermitteln, ob ein Modul richtig oder falsch zugeordnet ist, indem es entschlüsselten Medieninhalt bereitstellt oder nicht, wobei dementsprechend das Prüfverfahren ein positives beziehungsweise ein negatives Ergebnis liefert. Das Verfahren verwendet einen Speicher derart, dass zu einer Kennung des jeweiligen Empfangskanals das Ergebnis des Prüfverfahrens pro Modul ermittelt und in dem Speicher gespeichert wird. Beim Zuordnen eines verschlüsselten Empfangskanals zu einem Modul wird anhand der mindestens einen Kennung des verschlüsselten Empfangskanals ermittelt, ob zu mehr als zu einem Modul ein positives Ergebnis des Prüfverfahrens zu dieser mindestens einen Kennung ermittelt und gespeichert wurde, und falls ja, das Modul zum Zuordnen ausgewählt wird, das eine geringste Wertigkeit aufweist. Die geringste Wertigkeit wird mittels des Speichers bestimmt.

Gemäß einer Ausführungsform des Verfahrens wird die Wertigkeit eines Moduls indem bestimmt, dass eine modulübergreifende Zahl von einer modulspezifischen Zahl subtrahiert wird, wobei die modulspezifische Zahl die Anzahl der Kennungen ist, zu denen für das jeweilige Modul ein positives Ergebnis des Prüfverfahrens ermittelt und gespeichert wurde, wobei die modulübergreifende Zahl die Anzahl der Kennungen in einer Schnittmenge ist, zu denen zu allen Modulen gleichermaßen ein positiven Ergebnis des Prüfverfahrens ermittelt und gespeichert wurde.
Es kommen ausschließlich Module in Betracht, die für die jeweilige Kennung ein positives Ergebnis des Prüfverfahrens aufweisen.

Gemäß einer Ausführungsform des Verfahrens wird das Prüfverfahren mit einer jeweiligen Kennung für alle Module unmittelbar nacheinander ausgeführt, wobei das Ergebnis ermittelt und gespeichert wird.

Gemäß einer Ausführungsform des Verfahrens wird das Prüfverfahren mit einer jeweiligen Kennung für alle Module dann ausgeführt wird, wenn zu dieser Kennung kein Ergebnis gespeichert ist.

Gemäß einer Ausführungsform des Verfahrens wird das Prüfverfahren mit mehreren Kennung mehrfach ausgeführt zu einer festgelegten Tageszeit und/oder sofern die Empfangseinrichtung inaktiv ist.

Gemäß einer Ausführungsform des Verfahrens wird das Prüfverfahren mit einer jeweiligen Kennung und dem Modul nach erfolgter Zuordnung ausgeführt, sofern zu dieser Kennung und dem Modul ein positives Ergebnis im Speicher existiert.

Gemäß einer Ausführungsform des Verfahrens wird der Speicher gelöscht, sofern zu der jeweiligen Kennung und dem Modul ein positives Ergebnis im Speicher existiert und das Prüfverfahren ein negatives Ergebnis liefert.

Gemäß einer Ausführungsform des Verfahrens wird beim Zuordnen geprüft, ob die jeweilige Kennung in dem Speicher vorhanden ist, und falls ja, wird dem Modul das im Speicher gespeicherte Ergebnis zugeordnet.

Gemäß einer weiteren Ausgestaltung ist eine Empfangseinrichtung ausgebildet zum Empfangen und zum Ausgeben von Medieninhalt sowie von verschlüsselt übertragenen Medieninhalt. Die Empfangseinrichtung aufweisend mindestens zwei Module zum Entschlüsseln mindestens eines verschlüsselt übertragenen Medieninhaltes, aufweisend mindestens zwei Empfangselemente zum Empfangen eines Empfangskanals pro Empfangselement, mithin zum gleichzeitigen Empfangen von mindestens zwei Empfangskanälen, und die Empfangseinrichtung ferner aufweisend Mittel zur Durchführung des vorhergehend beschriebenen Verfahrens.

Gemäß einer weiteren Ausgestaltung ist eine Anordnung ausgebildet aufweisend eine beschriebene Empfangseinrichtung. Die Anordnung aufweisend mindestens einen Eingang für einen Empfangskanal, mindestens einen Ausgang zum Bereitstellen eines nicht verschlüsselten Medieninhaltes, mindestens zwei Schnittstellen für mindestens zwei Module zum Entschlüsseln mindestens eines verschlüsselt übertragenen Medieninhaltes. Die Anordnung ferner aufweisend eine Schaltung mit Schaltelementen, wobei die Schaltung eingerichtet ist, mittels der Schaltelemente die mindestens zwei Module so zu koppeln, dass sich die Module in Reihe schalten lassen und sich ein verschlüsselter Empfangskanal mittels mehrerer Module entschlüsseln lässt. Die Schaltung ist ferner eingerichtet, mittels der Schaltelemente die mindestens zwei Module mit den mindestens zwei Empfangskanälen so zu koppeln, dass jeder Empfangskanal mit jedem Modul koppelbar ist im Zuge der Durchführung des vorhergehend beschriebenen Verfahrens.

Der Vorteil der Erfindung ist darin zu sehen, dass sich ein Konfliktpotenzial, das bei der mehr oder wenigen dynamischen Verwendung der Module zum Entschlüsseln in Betracht kommt, weiter reduzieren lässt.

Eine mögliche Ausgestaltung kann auch darin gesehen werden, dass über eine einzige PC-Card-Schnittstelle mehrere Module gekoppelt sind und die Module nach dem Verfahren zugeordnet und gekoppelt werden, sodass das Verfahren mittels eines Meta-Moduls mit der beschriebenen Anordnung zum Einsatz kommt.

Es bietet sich an, dass mittels des Meta-Moduls die Kopplung mit den Modulen derart eingerichtet ist, dass das Meta-Modul alle sekundären Algorithmen der mehreren Module bereitstellt.

Es besteht ferner die Möglichkeit, dass mindestens ein Modul über USB mit der Empfangseinrichtung gekoppelt ist.

Nachfolgend wird die Erfindung anhand von Ausführungsbeispielen und zugehörigen Zeichnungen erläutert. Hierzu zeigen:
- Fig. 1: (Stand der Technik) Anordnung zum Entschlüsseln; EN 50221:1997; Seite 4
- Fig. 2: (Stand der Technik) Lösung mit mehreren Modulen; EN 50221:1997; Seite 11
- Fig. 3: Empfangseinrichtung mit drei Modulen
- Fig.4: Schaltung zum Koppeln von zwei Modulen
- Fig. 5: Ablaufschema zum Verfahren
- Fig. 6: Speicherabbild für die Modulauswahl

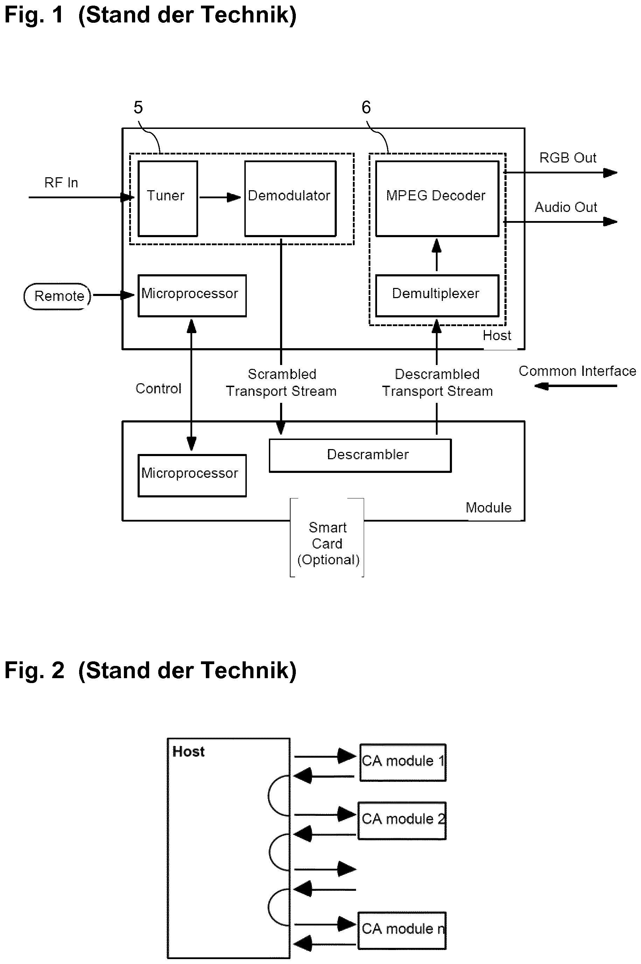

In der **Fig. 1** und **Fig. 2** ist jeweils eine Anordnung aus dem Stand der Technik gezeigt, wie sie in der Norm EN 50221:1997 auf der Seite 4 beziehungsweise 11 abgebildet sind. Die Fig. 1 und Fig. 2 der dienen dazu, den Unterschied zwischen dem Stand der Technik und der vorgestellten Lösung zu zeigen.

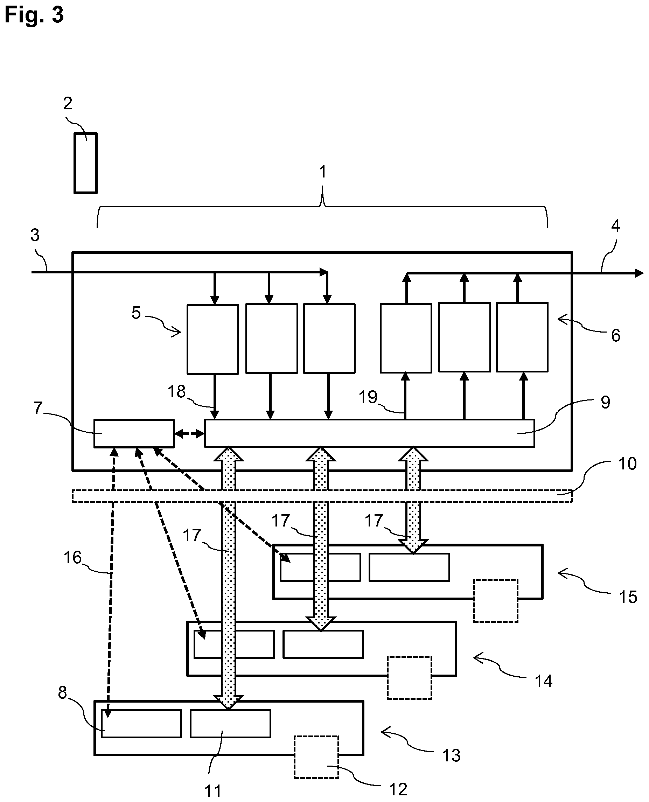

In der **Fig. 3** ist eine Empfangseinrichtung 1 gezeigt mit einer Fernbedienung 2. Es sind insgesamt drei Module 13, 14 und 15 vorgesehen. Die Module 13, 14 und 15 sind über die Schnittstelle 10 mit der übrigen Empfangseinrichtung 1 verbunden. Bei der Schnittstelle 10 kann es sich sowohl um PC-Card, um USB und/oder um eine andere derartige Schnittstelle 10 handeln.

Jedes Modul kann beispielsweise einen Mikrokontroller 8 aufweisen, ein Entschlüssselungselement 11 (aufweisend einen sog. "Descramber") sowie eine Karte 12. Die Schnittstelle 10 ist eingerichtet zum Austauschen von Daten. Die Steuerdaten 16 können vorgesehen sein zum einheitlichen Zusammenwirken mit einem zentralen Mikroprozessor 7, der auf der Empfangseinrichtung 1 eingerichtet ist. Die Transportstrom-Daten 17 sind hier vereinfacht mit einem Doppelpfeil angedeutet. Es handelt sich nämlich sowohl um verschlüsselte als auch um entschlüsselte Daten, die im Wesentlichen den Transportstrom beinhalten, wobei der Datenaustausch bidirektional erfolgt. Bezüglich der Schnittstelle 10 wird auf die Fig. 1 hingewiesen (vgl. "Common Interface").

Es ist eine Schaltung 9 eingerichtet (nicht in der Fig. 1 enthalten). Ferner sind beispielsweise drei Empfangselemente 5 vorgesehen sowie drei Dekoder/Demultiplexer 6. Den drei Empfangselementen 5 wird ein Rundfunksignal 3 bereitgestellt. D.h., dass mit einer solchen Anordnung der gleichzeitige Empfang von drei Rundfunkprogrammen (hier Empfangskanäle) möglich ist. Die drei Dekoder/Demultiplexer 6 sind zur weiteren Aufbereitung der drei Transportströme eingerichtet und können mindestens ein Ausgabesignal 4 bereitstellen (A/V = Audio- /Videoformat). Ein erstes Ausgabesignal 4 kann beispielweise direkt von der Empfangseinrichtung 1 ausgegeben werden (Ton/Bild). Ferner können noch zwei Aufzeichnungen (DVR) aktiv sein.

Die Schaltung 9 ist eingerichtet, die Empfangskanäle bzw. den übertragen Transportstrom 18 zunächst abhängig davon umzuleiten oder bereitzustellen, ob der jeweilige Empfangskanal verschlüsselt ist oder nicht. Hinzu kommen die Besonderheiten der verschiedenartigen Algorithmen zum Entschlüsseln. Die Schaltung 9 ist mit den drei Empfangselementen 5, mit den drei Dekodern/Demultiplexern 6 sowie über die Schnittstelle 10 mit den drei Modulen 13, 14 und 15 verbunden. Die Schaltung 9 stellt im Wesentlichen eine Schaltermatrix und/oder einen Multischalter bereit. Der Mikrokontroller 7 ist eingerichtet, über Steuerdaten die Schaltelemente der Schaltung 9 zu betätigen.

Mittels der Schaltung 9 ist es möglich, ein jedes der Empfangselemente 5 mit einem der drei Dekoder/Demultiplexer 6 unmittelbar zu koppeln. Das unmittelbare Koppeln ist für den unverschlüsselten Empfangskanal vorgesehen. Ferner ist es mit der Schaltung 9 möglich, zwei oder drei Module 13, 14 und 15 in Reihe zu schalten (vgl. Fig. 2) zu Gruppen. Die Schaltung 9 ist zudem dafür eingerichtet, dass der empfangene verschlüsselte Transportstrom einem Modul oder einer Gruppe bereitstellt wird und der unverschlüsselte Transportstrom von selbigen zurückgeliefert wird und zumindest einen der Dekoder/Demultiplexer 6 bereitgestellt wird. Beides, Transportstrom/Daten sowohl zum und als auch vom Modul, sind in den Transportstrom-Daten 17 enthalten.

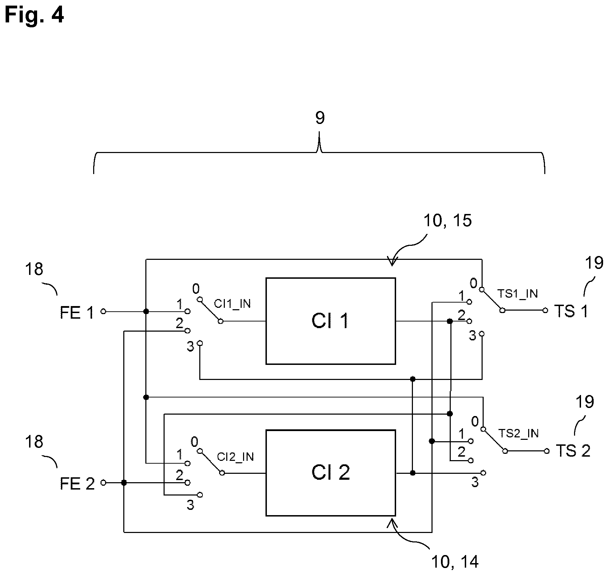

Anhand der **Fig. 4** soll die Schaltung 9 erläutert werden. Die Schaltung 9 ist für die Module 14 und 15 eingerichtet (CI 1, CI 2), wobei die Module über das Interfache 10 mit den vier Schaltelementen verbunden sind (CI1_IN, CI2_IN, TS1_IN, TS2_IN). Ferner können den vier Schaltelementen aus den Transportstrom-Daten 18 an zwei Eingängen (FE 1, FE 2) die verschlüsselten Empfangsdaten bereitgestellt werden sowie richtungsentgegen in den Transportstrom-Daten 19 entschlüsselte Empfangsdaten an zwei Ausgängen (TS 1, TS 2). Mittels der Schaltelemente stellt die Schaltung 9 die genannten Möglichkeiten der Kopplung bereit. Zum Beispiel sind in der Stellung "0" die Module nicht gekoppelt (sog. unmittelbare Kopplung).

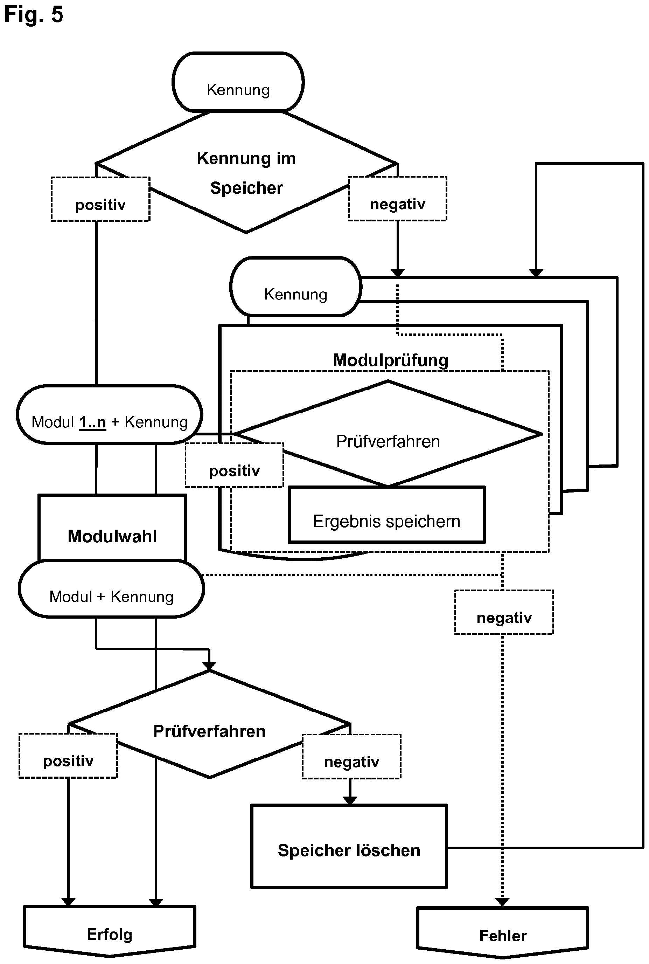

In der **Fig. 5** ist ein Schema gezeigt, das den Ablauf des Verfahrens näher bringen soll. Auslöser des Verfahrens ist, dass ein Empfangskanal aktiviert wird -durch eine Bedienerhandlung oder durch ein Zeitereignis (z.B. Aufnahme)- und dass der Empfangskanal verschlüsselt ist. Das Verfahren bezieht sich nunmehr nur noch auf die Module, die noch nicht in Benutzung sind. Für den Empfangskanal existiert mindestens eine repräsentative Kennung (oder auch jeweilige Kennung). Es wird geprüft (vgl. "Kennung im Speicher"), ob der Kennung bereits ein Modul zugewiesen wurde. Sofern das der Fall ist ("positiv"), kommt das Prüfverfahren, auf das noch näher eingegangen wird, zum Einsatz. Nach positiv verlaufenen Prüfverfahren ist die Entschlüsselung derart aktiv, dass Ton und Bild bereitgestellt werden.

Kommt es im Zuge des Prüfverfahrens dazu, dass dieses negativ ausgeht, kann angenommen werden, dass Module getauscht wurden oder Ähnliches. Folglich kann es von Vorteil sein, den Speicher zu löschen (teilweise oder vollständig) und mit der Modulprüfung fortzufahren.

Die Modulprüfung bildet einen wesentlichen Teil des Verfahrens, denn erst im Verlauf der Modulprüfung werden Kennungen mit dem Ergebnis des Prüfverfahrens zu dem jeweiligen Modul in den Speicher geschrieben ("Prüfverfahren", "Ergebnis speichern"). Sofern keine Modulprüfung zu einer Kennung erfolgt ist, kann folglich auch keine Kennung gefunden werden ("Kennung im Speicher"). Im Rahmen der Modulprüfung (mit der Kennung) wird zu jedem Modul das Prüfverfahren durchgeführt und das Ergebnis festgehalten.

Das Prüfverfahren sieht vor, dass mittels der Schaltung 9 mindestens eine Möglichkeit zur Entschlüsselung "auf Probe" erfolgt. Dabei wird das Ergebnis der Entschlüsselung dahingehend untersucht, ob ein realistisches Audio- und/oder Videosignal gebildet werden kann. Ist das der Fall, dann endet das Prüfverfahren mit einem positiven Ergebnis. Das Ausgabesignal wird weitergegeben oder -geleitet ("Erfolg").

Bezüglich des Aspektes, dass mehr als ein Modul zur Wahl stehen kann (vgl. "Modul 1..n + Kennung") kommt dem Schritt der Auswahl eines Modules ("Modulwahl") in Betracht, wobei ein bevorzugt zu verwendendes Modul ermittelt wird ("Modul + Kennung"). Auf die Funktionsweise der Modulwahl wird noch eingegangen. Zum Verlauf des Verfahrens kann es selbstverständlich abweichende Lösungen geben. Es ist z.B. denkbar, dass die Modulprüfung asynchron zur Modulauswahl ausgeführt wird.

In der praktischen Anwendung soll das Beschriebene möglichst zügig verlaufen, sodass der Bediener einen neuen verschlüsselten Kanal wählt und in wenigen Sekunden Ton und Bild erscheint. Zwischen der Wahl des Kanals und dem Erscheinen von Ton und Bild bleibt die Bildanzeige üblicherweise einfarbig (z.B. grau oder schwarz).

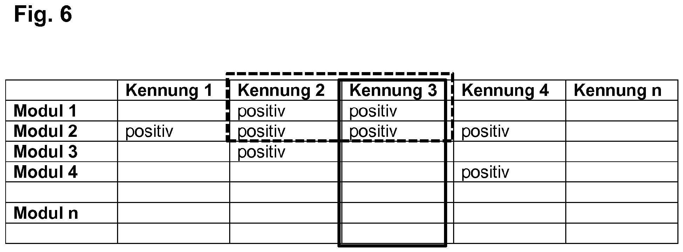

In der **Fig. 6** ist ein Beispiel für ein Abbild des Speichers gezeigt (sog. Speicherabbild). Die relevanten Daten/Ergebnisse lassen sich in tabellarischer Form aufstellen. Die Zeilen der Tabelle sind für die Module vorgesehen und die Spalten für die jeweiligen Kennungen. Der übrige Inhalt der Tabelle stellt das Ergebnis mindestens eines Prüfverfahrens dar. Die mit "positiv" gekennzeichneten Zellen geben an, dass das Prüfverfahren positiv abgeschlossen wurde, d.h., dass z.B. eine Entschlüsselung zu "Kennung 3" mit dem "Modul 1" und/oder mit dem "Modul 2" dereinst funktioniert und Aussicht auf Erfolg hat. Aus Gründen der Übersichtlichkeit wurde der Vermerk "negativ" für die Kennungen 1 bis 4, die offensichtlich die Modulprüfung durchlaufen haben, weggelassen.

Zunächst ist festzustellen, dass zu den Vorhandenen zusätzliche Module und zusätzliche Kennungen (z.B. "Kennung 5") hinzu kommen können. Die Tabelle kann mithin einen dynamischen Inhalt aufweisen. Ferner können Zeitstempel (Ausführungszeit der Prüfung) oder sonstige Vermerke zu dem Modul gespeichert sein, wie z.B., ob das Modul momentan in Benutzung ist. Module, die in Benutzung sind, kommen für eine Zuordnung zur Kennung nicht in Frage.

Bezüglich der Kennung kommen verschiedene Möglichkeiten in Betracht. Eine erste Möglichkeit besteht, darin eine Programmbezeichnung oder -ID, eine Kanalnummer oder ein ähnliches Datenfeld zu verwenden, das den Bezug zur Empfangsquelle eindeutig macht. Eine nächste Möglichkeit könnte berücksichtigen, dass ein und das selbe Programm über verscheiden Empfangsquellen bezogen werden kann. D.h., dass die Kennung eindeutig bezügliches des Programmes ist. Ferner ist denkbar, dass die Verschlüsselung nur zu bestimmten Tageszeiten aktiv ist. Die Kennung müsste sich folglich auf den Inhalt des Programmes (i.S.v. Sendung) beziehen. Eine weitere Möglichkeit besteht darin, die eingangs erwähnten CA System IDs zu verwenden. D.h., dass die mindestens eine Kennung einen sekundären Algorithmus repräsentieren kann.

Ungeachtet dessen ist der Zweck der Tabelle, die Auswahl des "richtigen" Moduls vorzunehmen oder zu unterstützen, sofern mehr als ein Modul in Betracht kommt. Gemäß des Beispiels unterstützt "Modul 2" alle Kennungen "1" bis "4". Die übrigen Module "1", "3" und "4" sind lediglich in der Lage zu zwei oder zu einer Kennung zu entschlüsseln. Sofern beispielsweise "Kennung 3" zu prüfen ist, bietet sich daher "Modul 1" an (und nicht "Modul 2"), weil "Modul 1" in diesem Sinne eine geringere Wertigkeit aufweist, d.h. den geringen Funktionsumfang (zum Entschlüsseln). Die abstrakte Sicht der Wertigkeit bietet sich allerdings an, um nicht ausschließlich den Funktionsumfang in Betracht zu ziehen sondern z.B. auch Performance, Aktualität der Funktionalität oder Stromverbrauch. Es bietet sich ein Vorhalten der gewonnenen Daten an sowie einen Speicher zu verwenden, sodass zeitaufwändige Prüfungen wie das Prüfverfahren nicht ständig wiederholt werden müssen und sich Ergebnisse der Prüfungen zumindest teilweise aus dem Speicher entnehmen lassen.

Ein Beispiel zur Ermittlung der Wertigkeit wird wie folgt vorgeschlagen. Im ersten Schritt werden die Module für die jeweilige Kennung ermittelt (gemäß aktivierten Empfangskanal). Im Beispiel mit der "Kennung 3" (vgl. Rahmen) kommen "Modul 1" und "Modul 2" in die nähere Wahl. Im zweiten Schritt wird eine Schnittmenge gebildet. Die Schnittmenge dient der Ermittlung der Anzahl der Kennungen, die zusätzlich zu der "Kennung 3" noch übereinstimmen (vgl. Rahmen gestrichelt). Somit lässt sich die modulübergreifende Zahl ermitteln, die hier Zwei ist. Die Schnittmenge weist nämlich zwei Kennungen auf ("Kennung 2" und "Kennung 3"). Nunmehr lässt sich pro Modul eine Wertzahl errechnen, indem von der modulspezifischen Zahl (die Anzahl der Kennungen mit dem Vermerk "positiv") die modulübergreifende Zahl subtrahiert wird. Für das "Modul 1" lautet die modulspezifische Zahl Zwei und die Wertzahl folglich Null. Für das "Modul 2" lautet die modulspezifische Zahl Vier und die Wertzahl folglich Zwei. Mithin sind dem "Modul 1" eine geringere Wertzahl zuzuschreiben und damit die geringere Wertigkeit, weshalb eine Modulwahl in dem Beispiel für die "Kennung 3" das "Modul 1" vorschlagen würde. Es kann vorkommen, dass in der Tabelle (Speicher) über einhundert Kennungen eingetragen sind.

Sofern die ermittelten Wertzahlen gleich sind, kann die Modulwahl auf einen zusätzlichen Parameter zurückgreifen (z.B. Zeile in der Tabelle, Zufallszahl, o.ä.) der lediglich der Entscheidung dient. Der Parameter könnte auch eine weitere Wertzahl sein, die ermittelt wird.

Es kann zweckmäßig sein, die Modulprüfung derart zu verwenden, dass mit dieser ein Vorschlag für eine Konfiguration gemacht wird, die ein Bediener nachträglich manuell ändern kann.

Es kann zweckmäßig sein, dass die Kennung, die eines Rundfunkprogrammes oder die eines sekundären Algorithmus ist (Identifikation; CA System ID).

Das Verfahren lässt auch sich mit anderen Worten beschreiben. Nachfolgend steht u.a. CAM für das Modul und Service als ein Beispiel für die Kennung (z.B. CA System ID).

Das Verfahren lässt sich als "intelligent Preselection" bezeichnen, das auf die bisherigen Verfahren "Selection" und "Preselection" zurückgreift.

Problematischerweise muss bei einem Twin-Receiver (zwei Empfangselemente) mit zwei CI-Schächten beim Einstecken zweier identischer CAM herausgefunden werden, welches CAM auf welchem Service entschlüsselt. Im Standard ist dazu eine sogenannte Query vorgesehen, die an jedes CAM geschickt, eine Query-Antwort liefern soll, in der das CAM dem Receiver mitteilt, ob es den aktuellen Service entschlüsseln kann oder nicht. In der Praxis funktioniert dies nicht, da diese Funktion von der überwiegenden Mehrzahl der am Markt befindlichen CAM nicht oder fehlerhaft unterstützt wird.

Es wurde ein erstes Verfahren (Selection) implementiert, bei dem beide CAM zeitgleich zur Entschlüsselung aufgefordert und die ausgehenden Transportströme der CAM sequentiell auf entschlüsselte Ströme untersucht werden. Jenes CAM, bei dem zuerst entschlüsselte Ströme festgestellt werden, wird zur Entschlüsselung weiter genutzt, das andere CAM dagegen abgewählt. Dieses Verfahren hat aber einen unschönen Nebeneffekt, der sich im Aufblenden von störenden Modulmeldungen äußert. Etliche CAM liefern bei Entschlüsselungsanforderung eines Service, den sie nicht unterstützen, eine Meldung (MMI) auf den Bildschirm, die den Nutzer darüber informieren soll, dass dem CAM die Rechte zur Entschlüsselung fehlen. Verwendet man das erste Verfahren ausschließlich, hat man bei jedem Umschalten auf einen verschlüsselten Service die Situation, dass das eine CAM den Service entschlüsselt, während das andere CAM ohne Rechte die Meldung zu fehlenden Rechten überblendet.

Um dies zu verhindern wurde das zweite Verfahren (Preselection) entwickelt. Dabei wird nach erstmaliger Anwendung des ersten Verfahrens der Modulschacht des entschlüsselnden CAM in die Datenbank zum Service dazugehörig abgelegt. Bei erneutem Umschalten auf diesen Service wird der zuvor gespeicherte Modulschacht aus der Datenbank geholt und bei Vorhandensein zunächst nur das darin befindliche CAM zur Entschlüsselung gewählt. Sollte sich nach Ablauf einer bestimmten Zeit keine Entschlüsselung einstellen, wird der gespeicherte Modulschacht gelöscht und das erste Verfahren erneut angewendet. Mit dem zweiten Verfahren werden somit die störenden Einblendungen von Modulmeldungen nach einer Anlernphase, also beim zweiten Schalten auf jeden Service, erfolgreich unterdrückt. Weiterhin bietet Preselection einen Vorteil bezüglich der Geschwindigkeit der Entschlüsselung, da sofort und ohne Auswahlverfahren das Modul mit bis dato erfolgreicher Entschlüsselung bekannt ist.

Hinsichtlich des neuen Verfahrens "intelligent Preselection" ist folgendes zu erwähnen:
Das erste Verfahren und das zweite Verfahren beziehen sich nur auf den jeweils aktuellen Service, womit die Fähigkeiten der eingesteckten CAM nicht serviceübergreifend beachtet werden. Daraus ergibt sich ein weiteres Problem, dass sich wie folgt äußert: "CAM 1" ist z.B. in der Lage, einen "Service 1" und einen "Service 2" zu entschlüsseln, "CAM 2" kann dagegen nur (denselben) "Service 1" entschlüsseln. In einer solchen Konstellation ist es sinnvoll, beim ersten Schalten auf "Service 1" zunächst "CAM 2" zu verwenden, damit "CAM 1" zur möglichen parallelen Entschlüsselung eines "Service 2" freigehalten wird.

In der Praxis ist dies von Bedeutung, wenn z.B. bei einer im Hintergrund laufenden Aufnahme von "Service 1" der Wunsch besteht, zeitgleich "Service 2" live zu schauen. Verwendet man nur das erste und das zweite Verfahren, ist es Zufall, ob bereits das optimale CAM gewählt worden ist. Andernfalls wird "Service 2" nicht entschlüsselt. Es benötigt also ein neues Verfahren (intelligent Preselection), das die Fähigkeiten der CAM serviceübergreifend ermittelt und die Preselection daran anpasst.

Lösungsbezogen wird das erste Verfahren (Selection) erweitert, indem nicht wie bisher beim zuerst gefundenen entschlüsselnden CAM aufgehört, sondern die Fähigkeit beider CAM zur Entschlüsselung ermittelt wird. Das zweite Verfahren (Preselection) wird dahingehend geändert, dass gemäß dem Ergebnis des ersten Verfahrens nicht nur der erstgefundene Modulschacht, sondern alle gefundenen Modulschächte in die Datenbank eingetragen werden. Im dem neu zu implementierenden Verfahren (intelligent Preselection) wird beim Start des Gerätes die Datenbank nach der Anzahl der entschlüsselten Services je Modul abgefragt und im Livebetrieb bei jedem neu gefundenen Service aktualisiert. Beim Schalten auf einen Service mit mehreren abgespeicherten Modulschächten aus dem zweiten Verfahren wird das CAM mit der kleinsten Anzahl entschlüsselnder Services bevorzugt ausgewählt. Im Ergebnis ist immer das optimale CAM gewählt.

Weiterhin gilt es bei diesem Verfahren zu erkennen, ob sich an der aktuellen Konstellation etwas geändert hat, z.B. durch Umstecken, Wegfall oder Zustecken von CAM bzw. durch geänderte Rechte von Smartcards in den CAM. Den Wegfall von Entschlüsselungsrechten erkennt man problemlos am Ausfall der Entschlüsselung (Preselection Timeout). Das Hinzukommen von Ressourcen zeigt sich daran, dass ein Service, der bisher nicht entschlüsselt werden konnte, nun entschlüsselt wird. Beide Fälle lassen sich durch Vergleich der gespeicherten Modulschächte je Service ermitteln. Stellt man eine geänderte Konstellation fest, werden alle gespeicherten Modulschächte auf allen Services gelöscht und damit wird automatisch das erste Verfahren wieder aktiv.

Um das Verfahren für den Kunden möglichst komfortabel zu gestalten, sind weitere Ausbaustufen denkbar. Möglich ist z.B. ein automatischer Scan über einen nächtlichen Servicetimer. Dabei muss auf alle verschlüsselten Services für eine hinreichende Zeit abgestimmt und die Informationen in der Datenbank neu gespeichert oder aktualisiert werden. Dieser Scan kann auch manuell im Verschlüsselungsmenü ausführbar gemacht werden.

### Bezugszeichenliste

- 1: Empfangseinrichtung
- 2: Fernbedienung
- 3: Rundfunksignal
- 4: Ausgabesignal (A/V)
- 5: Empfangselement (3 Stück)
- 6: Dekoder/Demultiplexer (3 Stück)
- 7: Mikroprozessor
- 8: Mikroprozessor
- 9: Schaltung
- 10: Schnittstelle
- 11: Entschlüsselelement
- 12: Karte
- 13: Modul (3)
- 14: Modul (2)
- 15: Modul (1)
- 16: Steuerdaten
- 17: Transportstrom-Daten (verschlüsselt/entschlüsselt)
- 18: Transportstrom-Daten (vom Empfangselement)
- 19: Transportstrom-Daten (zum Dekoder)

## Patentansprüche

1. Verfahren für eine Empfangseinrichtung,
die eingerichtet ist zum Empfangen und zum Ausgeben von Medieninhalt sowie von verschlüsselt übertragenen Medieninhalt,
wobei ein Medieninhalt über einen Empfangskanal empfangen wird und dem Empfangskanal mindestens eine Kennung zugeordnet ist,
wobei mehrere Empfangskanäle eingerichtet sind,
wobei mindestens ein verschlüsselter Empfangskanal eingerichtet ist zum Empfangen von verschlüsselt übertragenen Medieninhalt,
wobei der verschlüsselt übertragene Medieninhalt mittels eines primären Algorithmus verschlüsselt wurde,
wobei mindestens ein Modul eingerichtet ist zum Entschlüsseln mindestens eines verschlüsselt übertragenen Medieninhaltes mittels eines oder mehrerer sekundärer Algorithmen,
wobei mittels des Verfahrens einem verschlüsselten Empfangskanal ein Modul zugeordnet wird und dieser verschlüsselte Empfangskanal mit dem zugeordneten Modul gekoppelt wird zum Entschlüsseln eines verschlüsselt übertragenen Medieninhaltes mittels des zugeordneten Moduls,
wobei ein richtig zugeordnetes und gekoppeltes Modul entschlüsselten Medieninhalt indem bereitstellt, dass die mit dem primären Algorithmus erzeugte Verschlüsselung mittels des sekundären Algorithmus aufgelöst wird,
wobei ein falsch zugeordnetes und gekoppeltes Modul keinen entschlüsselten Medieninhalt bereitstellt,
wobei ein Prüfverfahren eingerichtet ist zum Ermitteln, ob ein Modul richtig oder falsch zugeordnet ist, indem es entschlüsselten Medieninhalt bereitstellt oder nicht, wobei dementsprechend das Prüfverfahren ein positives beziehungsweise ein negatives Ergebnis liefert,
wobei das Verfahren einen Speicher derart verwendet, dass zu einer Kennung des jeweiligen Empfangskanals das Ergebnis des Prüfverfahrens pro Modul ermittelt und in dem Speicher gespeichert wird,
wobei beim Zuordnen eines verschlüsselten Empfangskanals zu einem Modul anhand der mindestens einen Kennung des verschlüsselten Empfangskanals ermittelt wird, ob zu mehr als zu einem Modul ein positives Ergebnis des Prüfverfahrens zu dieser mindestens einen Kennung ermittelt und gespeichert wurde, und falls ja, das Modul zum Zuordnen ausgewählt wird, das eine geringste Wertigkeit aufweist,
wobei die geringste Wertigkeit mittels des Speichers bestimmt wird,
wobei die Wertigkeit eines Moduls indem bestimmt wird, dass eine modulübergreifende Zahl von einer modulspezifischen Zahl subtrahiert wird, wobei die modulspezifische Zahl die Anzahl der Kennungen ist, zu denen für das jeweilige Modul ein positives Ergebnis des Prüfverfahrens ermittelt und gespeichert wurde,
wobei die modulübergreifende Zahl die Anzahl der Kennungen in einer Schnittmenge ist, zu denen zu allen Modulen gleichermaßen ein positiven Ergebnis des Prüfverfahrens ermittelt und gespeichert wurde.

2. Verfahren gemäß Anspruch 1,
wobei das Prüfverfahren mit einer jeweiligen Kennung für alle Module unmittelbar nacheinander ausgeführt wird, wobei das Ergebnis ermittelt und gespeichert wird.

3. Verfahren gemäß einem der Ansprüche 1 bis 2,
wobei das Prüfverfahren mit einer jeweiligen Kennung für alle Module dann ausgeführt wird, wenn zu dieser Kennung kein Ergebnis gespeichert ist.

4. Verfahren gemäß einem der Ansprüche 1 bis 3,
wobei das Prüfverfahren mit mehreren Kennungen mehrfach ausgeführt wird zu einer festgelegten Tageszeit und/oder sofern die Empfangseinrichtung inaktiv ist.

5. Verfahren gemäß einem der Ansprüche 1 bis 4,
wobei das Prüfverfahren mit einer jeweiligen Kennung und dem Modul nach erfolgter Zuordnung ausgeführt wird, sofern zu dieser Kennung und dem Modul ein positives Ergebnis im Speicher existiert.

6. Verfahren gemäß Anspruch 5,
wobei der Speicher gelöscht wird, sofern zu der jeweiligen Kennung und dem Modul ein positives Ergebnis im Speicher existiert und das Prüfverfahren ein negatives Ergebnis liefert.

7. Verfahren gemäß einem der Ansprüche 1 bis 6,
wobei beim Zuordnen geprüft wird, ob die jeweilige Kennung in dem Speicher vorhanden ist, und falls ja, dem Modul das im Speicher gespeicherte Ergebnis zugeordnet wird.

8. Empfangseinrichtung zum Empfangen und zum Ausgeben von Medieninhalt sowie von verschlüsselt übertragenen Medieninhalt,
aufweisend mindestens zwei Module zum Entschlüsseln mindestens eines verschlüsselt übertragenen Medieninhaltes,
aufweisend mindestens zwei Empfangselemente zum Empfangen eines Empfangskanals pro Empfangselement, mithin zum gleichzeitigen Empfangen von mindestens zwei Empfangskanälen,
und die Empfangseinrichtung ferner aufweisend Mittel zur Durchführung des Verfahrens gemäß einem der Ansprüche 1 bis 7.

9. Anordnung aufweisend eine Empfangseinrichtung gemäß Anspruch 8,
die Anordnung aufweisend mindestens einen Eingang für einen Empfangskanal, mindestens einen Ausgang zum Bereitstellen eines nicht verschlüsselten Medieninhaltes,
mindestens zwei Schnittstellen für mindestens zwei Module zum Entschlüsseln mindestens eines verschlüsselt übertragenen Medieninhaltes,
die Anordnung ferner aufweisend eine Schaltung mit Schaltelementen,
wobei die Schaltung eingerichtet ist, mittels der Schaltelemente die mindestens zwei Module so zu koppeln, dass sich die Module in Reihe schalten lassen und sich ein verschlüsselter Empfangskanal mittels mehrerer Module entschlüsseln lässt, und wobei die Schaltung ferner eingerichtet ist, mittels der Schaltelemente die mindestens zwei Module mit den mindestens zwei Empfangskanälen so zu koppeln, dass jeder Empfangskanal mit jedem Modul koppelbar ist im Zuge der Durchführung des Verfahrens gemäß einem der Ansprüche 1 bis 7.

## Claims

1. Method for a receiving device,
which is configured to receive and to output media content and media content transmitted in encrypted form,
wherein a media content is received via a receiving channel and at least one identifier is allocated to the receiving channel,
wherein several receiving channels are configured,
wherein at least one encrypted receiving channel is configured to receive media content transmitted in encrypted form,
wherein the media content transmitted in encrypted form was encrypted using a primary algorithm,
wherein at least one module is configured to decrypt at least one media content transmitted in encrypted form by means of one or more secondary algorithms,
wherein by means of the method a module is allocated to an encrypted receiving channel and this encrypted receiving channel is coupled with the allocated module for decrypting a media content transmitted in encrypted form by means of the allocated module,
wherein a properly allocated and coupled module provides decrypted media content by resolving the encryption generated with the primary algorithm by means of the secondary algorithm,
wherein an incorrectly allocated and coupled module does not provide any decrypted media content,
wherein a test procedure is configured to determine whether a module is correctly or incorrectly allocated by providing decrypted media content or not,
wherein the test procedure accordingly provides a positive or negative result, respectively,
wherein the method uses a memory in such a way that the result of the test procedure is determined per module and is stored in the memory for an identifier of the respective receiving channel,
wherein, when allocating an encrypted receiving channel to a module, it is determined on the basis of the at least one identifier of the encrypted receiving channel whether a positive result of the test procedure for this at least one identifier has been determined and stored for more than one module, and if so, the module with the lowest significance is selected for allocation,
wherein the lowest significance is determined by means of the memory,
wherein the significance of a module is determined by a module-spanning number being subtracted from a module-specific number,
wherein the module-specific number is the number of identifiers for which a positive result of the test procedure was determined and stored for the respective module,
wherein the module-spanning number is the number of identifiers in an intersecting set for which a positive result of the test procedure was determined and stored for all modules equally.

2. Method according to claim 1,
where the test procedure is carried out with a respective identifier for all modules directly one after the other, the result being determined and stored.

3. Method according to any one of claims 1 to 2,
wherein the test procedure is carried out with a respective identifier for all modules when no result is stored for this identifier.

4. Method according to any one of claims 1 to 3,
wherein the test procedure is carried out with several identifiers several times at a specified time of day and/or if the receiving device is inactive.

5. Method according to any one of claims 1 to 4,
wherein the test procedure is carried out with a respective identifier and the module after allocation having been carried out, if a positive result exists in the memory for this identifier and the module.

6. Method according to claim 5,
wherein the memory is erased if a positive result exists in the memory for the respective identifier and module and the test procedure yields a negative result.

7. Method according to any one of claims 1 to 6,
wherein during the allocation it is checked whether the respective identifier is present in the memory, and if so, the result stored in the memory is allocated to the module.

8. Receiving device for receiving and outputting media content as well as media content transmitted in encrypted form,
comprising at least two modules for decrypting at least one media content transmitted in encrypted form,
comprising at least two receiving elements for receiving one receiving channel per receiving element, thus for simultaneously receiving at least two receiving channels,
and the receiving device further comprising means for carrying out the method according to any one of claims 1 to 7.

9. Assembly comprising a receiving device according to claim 8,
the assembly comprising at least one input for a receiving channel,
at least one output for providing a non-encrypted media content,
at least two interfaces for at least two modules for decrypting at least one media content transmitted in encrypted form,
the assembly further comprising a circuit with switching elements,
the circuit being configured to couple the at least two modules by means of the switching elements in a way that the modules can be connected in series and an encrypted receiving channel can be decrypted by means of several modules, and
wherein the circuit is further configured to couple the at least two modules to the at least two receiving channels by means of the switching elements in a way that each receiving channel can be coupled to each module in the course of carrying out the method according to any one of claims 1 to 7.

## Revendications

1. Un procédé pour un dispositif de réception,
qui est configuré pour recevoir et émettre du contenu médiatique et du contenu médiatique transmis en forme cryptée,
dans lequel un contenu médiatique est reçu via un canal de réception et au moins un identifiant est attribué au canal de réception,
dans lequel plusieurs canaux de réception sont mis en place,
dans lequel au moins un canal de réception crypté est configuré pour recevoir du contenu médiatique transmis en forme cryptée,
dans lequel le contenu médiatique transmis en forme cryptée a été crypté moyennant un algorithme primaire,
dans lequel au moins un module est prévu pour décrypter au moins un contenu médiatique transmis en forme crypté au moyen d'un ou plusieurs algorithmes secondaires,
dans lequel, au moyen du procédé, un module est attribué à un canal de réception crypté et ce canal de réception crypté est couplé au module attribué pour décrypter un contenu médiatique transmis en forme cryptée au moyen du module attribué,
dans lequel un module attribué et couplé correctement fournit un contenu médiatique décrypté en résolvant le cryptage généré par l'algorithme primaire par l'algorithme secondaire,
dans lequel un module attribué et couplé incorrectement ne fournit pas de contenu médiatique décrypté,
dans lequel une procédure de test est configurée pour déterminer si un module est correctement ou incorrectement attribué en fournissant ou non du contenu médiatique décrypté, en conséquence la procédure de test donnant un résultat positif ou négatif, respectivement,
le procédé utilisant une mémoire de telle sorte que, pour un identifiant du canal de réception respectif, le résultat de la procédure de test soit déterminé par module et stocké dans la mémoire,
dans lequel, lors de l'attribution d'un canal de réception crypté à un module, il est déterminé sur la base de l'au moins un identifiant du canal de réception crypté si un résultat positif de la procédure de test pour cet au moins un identifiant a été déterminé et stocké pour plus qu'un module, et si c'est le cas, le module ayant la plus faible importance est sélectionné pour l'attribution,
dans lequel l'importance la plus faible est déterminée au moyen de la mémoire,
dans lequel l'importance d'un module est déterminée en soustrayant d'un numéro spécifique au module un numéro couvrant l'ensemble des modules,
dans lequel le numéro spécifique au module est le nombre d'identifiants pour lesquels un résultat positif de la procédure de test a été déterminé et enregistré pour le module respectif,
dans lequel le numéro couvrant l'ensemble des modules est le nombre d'identifiants dans une intersection pour laquelle un résultat positif de la procédure de test a été déterminé et enregistré pour tous les modules de manière égale.

2. Procédé selon la revendication 1,
dans lequel la procédure de test est directement effectuée avec un identifiant respectif pour tous les modules à la suite, le résultat étant déterminé et stocké.

3. Procédé selon l'une quelconque des revendications 1 à 2,
dans lequel la procédure de test est exécutée avec un identifiant respectif pour tous les modules si aucun résultat n'est enregistré pour cet identifiant.

4. Procédé selon l'une quelconque des revendications 1 à 3,
dans lequel la procédure de test est effectuée plusieurs fois avec plusieurs identifiants à un moment précis de la journée et/ou si le dispositif de réception est inactif.

5. Procédé selon l'une quelconque des revendications 1 à 4,
dans lequel la procédure de test est effectuée avec un identifiant respectif et le module après l'attribution effectuée, si un résultat positif existe dans la mémoire pour cet identifiant et le module.

6. Procédé selon la revendication 5,
dans lequel la mémoire est effacée si un résultat positif existe dans la mémoire pour l'identifiant respectif et le module et que la procédure de test donne un résultat négatif.

7. Procédé selon l'une quelconque des revendications 1 à 6,
dans lequel, lors de l'attribution, il est vérifié si l'identifiant correspondant est présent dans la mémoire et, dans l'affirmative, le résultat stocké dans la mémoire est attribué au module.

8. Dispositif de réception pour recevoir et émettre du contenu médiatique ainsi que du contenu médiatique transmis en forme cryptée,
comprenant au moins deux modules pour le décryptage d'au moins un contenu médiatique transmis en forme cryptée,
comprenant au moins deux éléments de réception pour recevoir un canal de réception par élément de réception, donc pour recevoir simultanément au moins deux canaux de réception,
et le dispositif de réception comprenant en outre des moyens pour mettre en œuvre le procédé selon l'une quelconque des revendications 1 à 7.

9. Agencement comprenant un dispositif de réception selon la revendication 8,
l'agencement comprenant au moins une entrée pour un canal de réception, au moins une sortie pour fournir un contenu média non crypté,
au moins deux interfaces pour au moins deux modules pour décrypter au moins un contenu média transmis en forme cryptée,
l'agencement comprenant en outre un circuit avec des éléments de commutation,
le circuit étant configuré pour coupler les au moins deux modules au moyen des éléments de commutation de telle sorte que les modules puissent être connectés en série et qu'un canal de réception crypté puisse être décrypté au moyen de plusieurs modules,
et le circuit étant en outre configuré pour coupler les au moins deux modules aux au moins deux canaux de réception au moyen des éléments de commutation de telle sorte que chaque canal de réception puisse être couplé à chaque module au cours de l'exécution du procédé selon l'une quelconque des revendications 1 à 7.
